# EUROPÄISCHE PATENTSCHRIFT

(11) **EP 1 316 095 B1**
(45) Veröffentlichungstag und Bekanntmachung des Hinweises auf die Patenterteilung: **22.09.2004**
(21) Anmeldenummer: 01957738.6
(22) Anmeldetag: 30.07.2001
(51) Int. Cl.: H01G 9/042

(54) **VERFAHREN ZUR HERSTELLUNG EINER ELEKTRODE FÜR KONDENSATOREN UND ZUR HERSTELLUNG EINES KONDENSATORS**
METHOD FOR PRODUCING AN ELECTRODE FOR CAPACITORS AND FOR PRODUCING A CAPACITOR
PROCEDE POUR PRODUIRE UNE ELECTRODE POUR CONDENSATEURS ET POUR PRODUIRE UN CONDENSATEUR

(30) Priorität: 08.09.2000 DE 10044450
(43) Veröffentlichungstag der Anmeldung: 04.06.2003
(73) Patentinhaber: EPCOS AG, 81669 München (DE)
(72) Erfinder: STENZEL, Melanie, 89561 Demmingen (DE); ZILLGEN, Holger, 89564 Nattheim (DE); GIBER, Janos, 1111 Budapest (HU)
(74) Vertreter: Epping Hermann & Fischer
(86) Internationale Anmeldenummer: PCT/DE2001/002875
(87) Internationale Veröffentlichungsnummer: WO 2002/021548

(56) Entgegenhaltungen:
- US-A- 3 597 664
- US-A- 3 867 129
- US-A- 3 984 208

## Beschreibung

Die Erfindung betrifft ein Verfahren zur Herstellung einer Elektrode für Kondensatoren, ausgehend von einem Elektrodenableiter und einem damit kontaktierten Körper, wobei durch Oxidieren einer Oberflächenschicht des Körpers ein Elektrodenkörper gebildet wird, der auf seiner Oberfläche eine Dielektrikumschicht aufweist. Ferner betrifft die Erfindung ein Verfahren zur Herstellung eines Kondensators.

Es sind Verfahren zur Herstellung von Elektroden für Kondensatoren bekannt, bei denen, ausgehend von einem porösen Sinterkörper aus Niob, eine anodische Oxidation auf der Oberfläche des Sinterkörpers durchgeführt wird. Dadurch bildet sich eine Dielektrikumschicht aus Nb₂O₅ auf der Oberfläche des Sinterkörpers. US-A-3 867 129 zeigt ein Verfahren zur Herstellung eines Elektrolytkondensators, wobei ein Elektrodenableiter aus einem elektrisch leitfähigen Material besteht. Eine Oxyd-Sperrschicht, die ein Metall aus der Gruppe Mo oder W enthält, ist auf der Elektrode aufgebracht.

Die bekannten Verfahren bei Niob-Kondensatoren haben den Nachteil, daß die damit hergestellten Kondensatoren keine genügende Langzeitstabilität aufweisen. Dies ist darin begründet, daß der Sauerstoff aus der Dielektrikumschicht in das metallische Niob des Sinterkörpers diffundiert, wodurch in der Oxidschicht Suboxide gebildet werden, die halbleitende (NbO₂) beziehungsweise elektrisch leitende (NbO) Eigenschaften besitzen. Dadurch wird das Dielektrikum effektiv dünner, wodurch die Spannungsfestigkeit verloren geht und der Kondensator ausfällt.

Ziel der vorliegenden Erfindung ist es daher, ein Verfahren zur Herstellung einer Elektrode für Kondensatoren bereitzustellen, die eine hohe Langzeitstabilität aufweist.

Dieses Ziel wird erfindungsgemäß durch ein Verfahren nach Patentanspruch 1 erreicht. Weitere Ausgestaltungen der Erfindung sowie ein Verfahren zur Herstellung von Kondensatoren sind den weiteren Ansprüchen zu entnehmen.

Die Erfindung gibt ein Verfahren an, das die Herstellung einer Elektrode mit einem Elektrodenkörper, einem damit kontaktierten Elektrodenableiter, einer Dielektrikumschicht auf der Oberfläche des Elektrodenkörpers sowie einer Zwischenschicht zwischen der Dielektrikumschicht und dem Elektrodenkörper ermöglicht.

Gemäß dem erfindungsgemäßen Verfahren wird ausgegangen von einem Elektrodenableiter und einem damit kontaktierten Körper aus einem Material mit einer Komponente A und einer Komponente B. Diese Komponenten sind so gewählt, daß die Komponente A ein elektrisch leitfähiges Material ist, dessen Oberfläche durch Oxidation in ein Dielektrikum umgewandelt werden kann. Ferner werden die Komponenten so ausgewählt, daß der Absolutbetrag der freien Enthalpie ΔG der Oxidation bei der Komponente A größer ist als bei der Komponente B. Dadurch wird an der Oberfläche bevorzugt die Komponente A oxidiert. Schließlich muß noch als Randbedingung eingehalten werden, daß die Oberflächenenergie der Komponente A größer ist als die Oberflächenenergie der Komponente B.

Ausgehend von der beschriebenen Materialzusammensetzung werden folgende Schritte durchgeführt:
a) Die Komponente A des Materials wird in einer Oberflächenschicht des Körpers oxidiert, wodurch sich ein Elektrodenkörper bildet, der auf seiner Oberfläche eine Dielektrikumschicht aufweist.
b) Anschließend wird der Elektrodenkörper so lange bei einer geeigneten Temperatur wärmebehandelt, bis die Komponente B des Materials an der Oberfläche des Elektrodenkörpers segregiert. Dort bildet die Komponente B eine Zwischenschicht zwischen dem Elektrodenkörper und der Dielektrikumschicht.
   Ferner gibt die Erfindung ein Verfahren zur Herstellung eines Kondensators an, mit folgenden zusätzlichen Schritten:
c) Bedecken der Oberfläche der Poren der Elektrode mit einer Gegenelektrode
d) Kontaktieren der Gegenelektrode mit einem Gegenelektrodenableiter.

Durch geeignete Wahl der Komponente B kann die Zwischenschicht der erfindungsgemäßen Elektrode funktionell so gestaltet sein, daß sie den Austausch von Materie zwischen der Dielektrikumschicht und dem Elektrodenkörper hemmt.

Das erfindungsgemäße Verfahren hat den Vorteil, daß das Material, aus dem die Zwischenschicht gebildet wird, als Komponente des Körpermaterials vorliegt. Somit kann das Material der Zwischenschicht sehr einfach in das Verfahren eingebracht werden, beispielsweise in Form einer homogenen Legierung.

Die energetischen Voraussetzungen für die Bildung der Oxide der Komponenten A und B werden beispielsweise erfüllt von Niob als Komponente A und Vanadium als Komponente B. Die freie Enthalpie ΔG der Oxidation beträgt bei Niob (Nb₂O₅) ΔGₒₓ= -210,5 kcal/mol. Hingegen beträgt die freie Enthalpie der Oxidation von Vanadium (V₂O₅) ΔGₒₓ = -135,7 kcal/mol. Dies bedeutet, daß sich im Falle einer Oxidation, beispielsweise hervorgerufen durch anodisches Oxidieren, bevorzugt Nb₂O₅ und nicht V₂O₅ bilden wird. Somit wird sichergestellt, daß die Dielektrikumschicht der Elektrode durch oxidationsinduzierte Segregation bevorzugt aus dem dafür geeigneten Material der Komponente A gebildet wird.

Wählt man als Komponente A Niob und als Komponente B Vanadium, so erhält man auch die richtigen Größenverhältnisse für die jeweiligen Oberflächenenergien. Die Oberflächenenergie von Niob beträgt γ = 2,983 Jm⁻², während die Oberflächenenergie von Vanadium γ = 2,876 Jm⁻² beträgt. Dadurch wird erreicht, daß durch die nach der Oxidation durchgeführte Wärmebehandlung des Elektrodenkörpers sich die Komponente B mit der kleineren Oberflächenenergie an der Oberfläche des Elektrodenkörpers, also zwischen der Dielektrikumschicht und dem Elektrodenkörper, durch Segregation anreichert.

Daraus resultiert für das erfindungsgemäße Verfahren der Vorteil, daß die Komponente B mit der sehr einfachen Wärmebehandlung und ohne weitere zusätzliche Maßnahmen an den gewünschten Ort, nämlich zwischen die Oberfläche des Elektrodenkörpers und die Dielektrikumschicht, transportiert werden kann.

In einer vorteilhaften Ausgestaltung des Verfahrens kann die Komponente B so gewählt werden, daß die von ihr gebildete Zwischenschicht den Austausch von Sauerstoff zwischen der Dielektrikumschicht und dem Elektrodenkörper hemmt. Dazu ist es erforderlich, daß die Diffusionsgeschwindigkeit von Sauerstoff in der Komponente B geringer ist als in der Komponente A und daß sich Sauerstoff in der Komponente B weniger gut löst als in der Komponente A. Diese Forderung wird erfüllt durch die Wahl von Niob als Komponente A und Vanadium als Komponente B. Durch eine solche, die Diffusion von Sauerstoff hemmende Zwischenschicht kann die Suboxidbildung durch Verarmung an Sauerstoff in der Dielektrikumschicht aus Nb₂O₅ wirksam vermindert werden.

Als Material für das erfindungsgemäße Verfahren kann besonders vorteilhaft eine metallische Legierung verwendet werden, bei der der Anteil der Komponente B zwischen typischerweise 10 Gew.-ppm und 50 Gew.-% beträgt. Bei der Verwendung von Niob als Komponente A und Vanadium als Komponente B ist die Bereitstellung der Mischung in Form einer Legierung herstellungstechnisch besonders einfach, da es sich in beiden Fällen um Metalle handelt. Die Komponente B kann aber auch in Form einer Dotierung in dem Material vorliegen.

Darüber hinaus kann bei dem Material des Körpers für die Komponente A ein Ventilmetall wie Niob oder Tantal oder auch eine ventilmetallhaltige Legierung, wie beispielsweise eine Niob/Tantal-Legierung verwendet werden. Für den Fall einer Komponente A, die eine Niob/Tantal-Legierung darstellt, würde man für die Dielektrikumschicht ein Mischoxid mit besonders vorteilhaften Eigenschaften erhalten.

Der in dem Verfahren verwendete Körper kann besonders vorteilhaft ein poröser Körper sein, der z. B. durch Sintern eines Pulvers oder einer Paste hergestellt wurde. Ein poröser Körper als Elektrodenkörper hat den Vorteil einer großen Oberfläche, so daß der mit der Elektrode hergestellte Kondensator eine hohe Kapazität aufweist.

Zur Verringerung der Sauerstoffdiffusion zwischen Dielektrikumschicht und Elektrodenkörper kommt insbesondere eine Komponente B in Betracht, die Scandium, Yttrium, ein Lanthanid, Titan, Zirkon, Vanadium, Chrom oder Molybdän enthält. Als Lanthanid kommt dabei Lanthan, Cer, Praseodym, Neodym, Polonium, Samarium, Europium, Gadolinium, Terbium, Dysprosium, Holmium, Erbium, Ytterbium oder Lutetium in Betracht.

Weiterhin ist es besonders vorteilhaft, den Anteil der Komponente B am Material des Körpers sowie die Dauer und die Temperatur der Wärmebehandlung für den Elektrodenkörper so zu wählen, daß eine Zwischenschicht mit einer Dicke von wenigstens zwei atomaren Monolagen entsteht. Die Herstellungsbedingungen für den Anodenkörper können aber beispielsweise durch Verlängerung der Heizdauer oder Erhöhung der Heiztemperatur auch so gewählt werden, daß eine dickere Zwischenschicht entsteht. Eine solche Zwischenschicht kann beispielsweise im Falle von Niob (Komponente A) und Vanadium (Komponente B) durch einen Anteil der Komponente B von 1 % an der Legierung und mit einer Heizdauer von typischerweise 0,5 bis 3 Stunden und einer Heiztemperatur von bis zu 450 °C erreicht werden.

Im folgenden wird die Erfindung anhand von Ausführungsbeispielen und den dazugehörigen Figuren näher erläutert.
- Figur 1: zeigt beispielhaft den prinzipiellen Aufbau einer erfindungsgemäßen Elektrode im schematischen Querschnitt.
- Figur 2: zeigt beispielhaft einen Elektrolyt-Kondensator mit der erfindungsgemäßen Elektrode als Anode im schematischen Querschnitt.

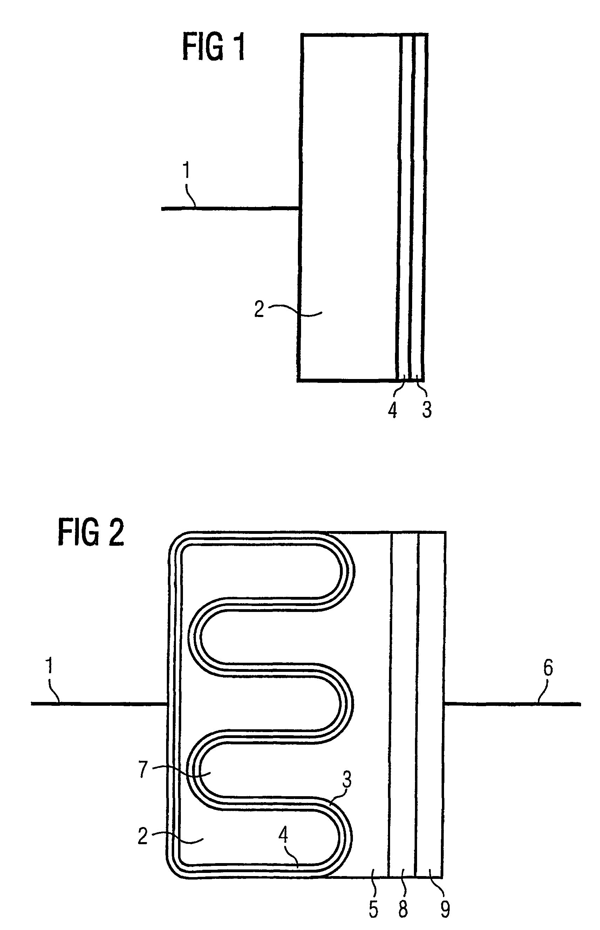

Figur 1 zeigt eine Elektrode mit einem Elektrodenkörper 2, der mit einem Elektrodenableiter 1 elektrisch leitend verbunden ist. Auf der Oberfläche des Elektrodenkörpers 2 ist eine Dielektrikumschicht 3 angeordnet. Zwischen dem Elektrodenkörper 2 und der Dielektrikumschicht 3 ist eine Zwischenschicht 4 angeordnet.

Figur 2 zeigt einen Elektrolyt-Kondensator mit der erfindungsgemäßen Elektrode als Anode, wobei die Elektrode dem prinzipiellen Aufbau aus Figur 1 entspricht und wobei der Elektrodenkörper 2 der Elektrode ein poröser Körper mit Poren 7 ist. Der Elektrodenkörper 2 umfaßt vorzugsweise ein Ventilmetall wie Tantal oder Niob, aus dem durch anodisches Oxidieren ein dielektrisches Oxid hergestellt werden kann.

Der Elektrodenkörper 2 wird vorzugsweise aus einer Legierung von Niob und Vanadium in Form eines Pulvers hergestellt. Dabei wird ein Elektrodenableiter 1 in Form eines Metalldrahtes oder in Form eines flächigen, metallischen Ableiters gestaltet. Beispielsweise wird ein tantalhaltiger Draht oder ein niobhaltiger Draht oder ein flächiger Ableiter aus einem entsprechenden Material von dem Pulver umpreßt und anschließend mit diesem zusammen gesintert. Daraus entsteht ein mit dem Elektrodenableiter 1 verbundener poröser Elektrodenkörper 2. Der Anteil des Vanadiums an der Legierung kann dabei typischerweise zwischen 10 Gew.-ppm und 50 Gew.-% betragen.

Die Herstellung der Elektrode kann alternativ auch mit Hilfe einer Paste erfolgen, die auf dem Elektrodenableiter 1 durch eine geeignete Methode, wie zum Beispiel Siebdruck, aufgetragen und anschließend gesintert wird.

In einem weiteren Prozeßschritt kann auf der Oberfläche des Elektrodenkörpers 2 durch anodisches Oxidieren eine dielektrische Schicht von Nb₂O₅ gebildet werden. Diese Schicht bildet dann die Dielektrikumschicht 3. Eine Elektrode aus Niob zeichnet sich durch eine hohe spezifische Ladung und durch eine hohe Dielektrizitätskonstante des gebildeten Dielektrikums aus. Der oben genannte Prozeßschritt ist dem Fachmann an sich als Formierung bekannt und kann zum Beispiel mit einem Elektrodenkörper 2, der in einen Elektrolyten eintaucht mit einem Phosphorsäuregehalt zwischen typischerweise 0,1 und 5 % bei einer Temperatur zwischen typischerweise 30 und 85 °C durchgeführt werden. Zwischen dem Elektrodenableiter 1 und der bei der Formierung verwendeten Gegenelektrode wird eine Formierspannung vorzugsweise zwischen 10 und 80 V angelegt.

In einem weiteren Fertigungsschritt wird nach der Bildung des Oxids durch Wärmebehandlung zwischen 250 und 450 °C für eine Dauer von 0,5 bis 3 Stunden erreicht, daß ein Teil des Vanadiums von der Legierung an die Oberfläche des Elektrodenkörpers 2 segregiert und zwischen der Dielektrikumschicht 3 und dem Elektrodenkörper 2 eine Zwischenschicht 4 ausbildet. Die Segregation ist möglich aufgrund unterschiedlicher Oberflächenenergien von Vanadium und Niob.

Die Zwischenschicht 4 besteht aus Vanadium das gegebenenfalls noch Verunreinigungen enthalten kann. Vanadium hat die Eigenschaft, daß es Sauerstoff weniger gut löst und weniger gut diffundieren läßt als Niob. Demnach ist es eine geeignete Diffusionsbarriere für den in der Dielektrikumschicht 3 aus Nb₂O₅ abgegebenen Sauerstoff, der ansonsten in den Niob-Elektrodenkörper 2 eindiffundieren würde. Durch diesen Sauerstoffverlust würde die Oxidschicht mit der Zeit in Suboxide umgewandelt werden.

Die so hergestellte erfindungsgemäße Elektrode kann weiterhin in an sich bekannter Weise zu einem Kondensator vervollständigt werden.

Die Poren 7 der Elektrode werden mit einem Gegenelektrodenmaterial 5 gefüllt, beispielsweise mit MnO₂ oder einem leitfähigen Polymer. In weiteren Prozeßschritten werden Kontaktschichten 8, 9 hergestellt, die schließlich mit einem Gegenelektrodenableiter 6 verbunden werden. Die erste Kontaktschicht 8 kann beispielsweise aus Graphit und die zweite Kontaktschicht 9 beispielsweise aus Silberleitlack gefertigt sein.

Die Erfindung beschränkt sich nicht auf die beispielhaft dargestellten Ausführungsbeispiele, sondern wird in ihrer allgemeinsten Form durch Patentanspruch 1 definiert.

## Patentansprüche

1. Verfahren zur Herstellung einer Elektrode für Kondensatoren, ausgehend von einem Elektrodenableiter (1) und einem damit kontaktierten Körper aus einem Material, das eine Komponente A und eine Komponente B umfaßt, die so gewählt sind, daß
- die Komponente A ein elektrisch leitfähiges Material ist, das durch Oxidation teilweise in ein Dielektrikum umgewandelt werden kann,
- der Absolutbetrag der freien Enthalpie ΔG der Oxidation bei der Komponente A größer ist als bei der Komponente B und
- die Oberflächenenergie der Komponente A größer ist als die Oberflächenenergie der Komponente B,
mit folgenden Schritten:
a) Oxidieren der Komponente A in einer Oberflächenschicht des Körpers zur Bildung eines Elektrodenkörpers (2), der auf seiner Oberfläche eine Dielektrikumschicht (3) aufweist
b) Wärmebehandlung des Elektrodenkörpers (2) bei einer geeigneten Temperatur so lange, bis die Komponente B an die Grenzfläche zwischen dem Elektrodenkörper (2) und der Dielektrikumschicht (3) segregiert und dort eine Zwischenschicht (4) bildet.

2. Verfahren nach Anspruch 1,
wobei die Komponente B so gewählt wird, daß die Zwischenschicht (4) den Austausch von Materie zwischen Dielektrikumschicht (3) und Elektrodenkörper (2) hemmt.

3. Verfahren nach Anspruch 1 oder 2,
wobei als Material des Körpers eine metallische Legierung verwendet wird, bei der der Anteil der Komponente B an der Legierung zwischen 10 Gew.-ppm und 50 Gew.-% beträgt.

4. Verfahren nach Anspruch 3,
wobei eine Legierung verwendet wird, bei der die Komponente A ein Ventilmetall oder eine ventilmetallhaltige Legierung und die Komponente B ein Metall ist.

5. Verfahren nach Anspruch 1 bis 4,
wobei ein poröser Körper verwendet wird.

6. Verfahren nach Anspruch 1 bis 5,
wobei die Komponente B so gewählt wird, daß die Zwischenschicht (4) die Diffusion von Sauerstoff zwischen Dielektrikumschicht (3) und Elektrodenkörper (2) hemmt.

7. Verfahren nach Anspruch 1 bis 6,
wobei die Komponente B so gewählt wird, daß sie Scandium, Yttrium, ein Lanthanid, Titan, Zirkon, Vanadium, Chrom, Molybdän oder Wolfram enthält.

8. Verfahren nach Anspruch 1 bis 7,
wobei als Komponente A Niob und als Komponente B Vanadium gewählt wird, wobei die Komponente A zu Nb₂O₅ oxidiert wird und wobei der Elektrodenkörper für eine Dauer von 0,5 bis 3 Stunden bei einer Temperatur bis zu 450 °C wärmebehandelt wird.

9. Verfahren nach Anspruch 1 bis 8,
wobei der Anteil der Komponente B am Material des Körpers sowie die Dauer und die Temperatur der Wärmebehandlung des Elektrodenkörpers (2) so gewählt wird, daß eine Zwischenschicht (4) mit einer Dicke von wenigstens zwei atomaren Monolagen entsteht.

10. Verfahren nach Anspruch 1 oder 2,
wobei die Komponente B als Dotierung in dem Material des Körpers vorliegt.

11. Verfahren zur Herstellung eines Kondensators unter Verwendung einer Elektrode die mittels eines Verfahrens gemäß einem der Ansprüche 1 bis 10 hergestellt wird, mit folgenden zusätzlichen Schritten:
c) Bedecken der Oberflächen der Poren (7) der Elektrode mit einer Gegenelektrode (5)
d) Kontaktieren der Gegenelektrode (5) mit einem Gegenelektrodenableiter (6).

## Claims

1. Process for producing an electrode for capacitors, starting from an electrode output conductor (1) and a body which is contact-connected thereto and is made from a material which comprises a component A and a component B, which are selected in such a way that
- component A is an electrically conductive material which can be partially converted into a dielectric by oxidation,
- the absolute magnitude of the free enthalpy ΔG of the oxidation is greater in the case of component A than in the case of component B, and
- the surface energy of component A is greater than the surface energy of component B,
comprising the following steps:
a) oxidation of component A in a surface layer of the body in order to form an electrode body (2) which has a dielectric layer (3) on its surface,
b) heat treatment of the electrode body (2) at a suitable temperature until component B segregates at the interface between the electrode body (2) and the dielectric layer (3), where it forms an interlayer (4).

2. Process according to Claim 1, in which component B is selected in such a way that the interlayer (4) inhibits the exchange of material between dielectric layer (3) and electrode body (2).

3. Process according to Claim 1 or 2, in which the material used for the body is a metallic alloy in which component B forms between 10 ppm by weight and 50% by weight of the alloy.

4. Process according to Claim 3, in which an alloy in which component A is a valve metal or an alloy containing valve metal and component B is a metal is used.

5. Process according to Claims 1 to 4, in which a porous body is used.

6. Process according to Claims 1 to 5, in which component B is selected in such a way that the interlayer (4) inhibits the diffusion of oxygen between dielectric layer (3) and electrode body (2).

7. Process according to Claims 1 to 6, in which component B is selected in such a way as to contain scandium, yttrium, a lanthanide, titanium, zirconium, vanadium, chromium, molybdenum or tungsten.

8. Process according to Claims 1 to 7, in which niobium is selected as component A and vanadium is selected as component B, in which component A is oxidized to form Nb₂O₅ and in which the electrode body is heat-treated at a temperature of up to 450°C for a duration of from 0.5 to 3 hours.

9. Process according to Claims 1 to 8, in which the proportion of the material of the body. formed by component B and the duration and temperature of the heat treatment of the electrode body (2) are selected in such a way that an interlayer (4) with a thickness of at least two atomic monolayers is formed.

10. Process according to Claim 1 or 2, in which component B is present as a doping in the material of the body.

11. Process for producing a capacitor using an electrode which is produced by means of a process according to one of Claims 1 to 10, comprising the following additional steps:
c) covering the surfaces of the pores (7) in the electrode with a counterelectrode (5),
d) contact-connecting the counterelectrode (5) to a counterelectrode output conductor (6).

## Revendications

1. Procédé de production d'une électrode pour des condensateurs, à partir d'un conducteur (1) d'électrode et d'une pièce ainsi mise en contact en un matériau qui comprend un constituant A et un constituant B choisis de façon à ce que
- le constituant A est un matériau conducteur de l'électricité qui peut être transformé par oxydation en partie en un diélectrique,
- la valeur absolue de l'enthalpie ΔG libre de l'oxydation est plus grande pour le constituant A que pour le constituant B, et
- l'énergie superficielle du constituant A est plus grande que l'énergie superficielle du constituant B
comprenant les stades qui consistent :
a) à oxyder le constituant A dans une couche superficielle de la pièce pour la formation d'une pièce (2) d'électrode qui a sur sa surface une couche (3) de diélectrique,
b) à traiter thermiquement la pièce (2) d'électrode à une température appropriée jusqu'à ce que le constituant B se ségrège à l'interface entre la pièce (2) d'électrode et la couche (3) de diélectrique et y forme une couche (4) intermédiaire.

2. Procédé suivant la revendication 1,
dans lequel on choisit le constituant B de façon à ce que la couche (4) intermédiaire empêche l'échange de matière entre la couche (3) de diélectrique et la pièce (2) d'électrode.

3. Procédé suivant la revendication 1 ou 2,
dans lequel on utilise comme matériau de la pièce un alliage métallique dans lequel la proportion du constituant B dans l'alliage représente entre 10 parties par million en poids et 50 % en poids.

4. Procédé suivant la revendication 3,
dans lequel on utilise un alliage dans lequel le constituant A est un métal valve ou un alliage contenant un métal valve et le constituant B est un métal.

5. Procédé suivant l'une quelconque des revendications 1 à 4,
dans lequel on utilise une pièce poreuse.

6. Procédé suivant l'une quelconque des revendications 1 à 5,
dans lequel on choisit le constituant B de façon à ce que la couche (4) intermédiaire empêche la diffusion de l'oxygène entre la couche (3) de diélectrique et la pièce (2) d'électrode.

7. Procédé suivant l'une quelconque des revendications 1 à 6,
dans lequel on choisit le constituant B de façon à ce qu'il contienne du scandium, de l'yttrium, un lanthanide, du titane, du zirconium, du vanadium, du chrome, du molybdène ou du tungstène.

8. Procédé suivant l'une quelconque des revendications 1 à 7,
dans lequel on choisit comme constituant A du niobium et comme constituant B du vanadium, le constituant A étant oxydé en Nb₂O₅ et la pièce d'électrode étant traitée thermiquement pendant une durée de 0,5 à 3 heures à une température allant jusqu'à 450 °C.

9. Procédé suivant l'une quelconque des revendications 1 à 8,
dans lequel on choisit la proportion du constituant B dans le matériau de la pièce ainsi que la durée et la température du traitement thermique de la pièce (2) d'électrode de façon à former une couche (4) intermédiaire d'une épaisseur d'au moins deux couches monoatomiques.

10. Procédé suivant la revendication 1 ou 2,
dans lequel le constituant B se présente sous la forme d'un dopage dans le matériau de la pièce.

11. Procédé de production d'un condensateur en utilisant une électrode qui a été produite au moyen d'un procédé selon l'une des revendications 1 à 10, comprenant les stades supplémentaires suivants :
c) on recouvre les surfaces des pores (7) de l'électrode d'une contre-électrode (5),
d) on met la contre-électrode (5) en contact avec un conducteur (6) de contre-électrode.
